# EUROPÄISCHE PATENTSCHRIFT

(11) **EP 3 653 473 B1**
(45) Veröffentlichungstag und Bekanntmachung des Hinweises auf die Patenterteilung: **09.02.2022**
(21) Anmeldenummer: 18206227.3
(22) Anmeldetag: 14.11.2018
(51) Int. Cl.: B62D 29/00

(54) **HYBRIDBAUTEIL**
HYBRID COMPONENT
COMPOSANT HYBRIDE

(43) Veröffentlichungstag der Anmeldung: 20.05.2020
(73) Patentinhaber: MAGNA STEYR Fahrzeugtechnik AG & Co KG, 8041 Graz (AT)
(72) Erfinder: KAUFMANN, Stefan, 8020 Graz (AT); MAIER, Stefan, 9473 Lavamünd (AT); TRUMMER, Peter, 8010 Graz (AT)
(74) Vertreter: Zangger, Bernd

(56) Entgegenhaltungen:
- WO-A1-2015/098538
- DE-A1-102013 018 562
- US-A1- 2004 028 858
- US-A1- 2017 327 157

## Beschreibung

### Gebiet der Erfindung

Die vorliegende Erfindung betrifft ein Hybridbauteil, insbesondere für eine Kraftfahrzeug-Karosserie.

### Stand der Technik

Hybridbauteile, also Bauteile die Teile aus verschiedenen Materialien umfassen, finden in den letzten Jahren Anwendung in Kraftfahrzeugen, vor allem in Premium-Fahrzeugen, welche den üblichen Massenfertigungsprozess für Automobile, inklusive kathodischer Tauschlackierung bzw. Lackierprozess, durchlaufen. Insbesondere werden solche Hybridbauteile als Karosseriebauteile eingesetzt.

Das Fügen verschiedener Materialien zu einem Hybridbauteil, insbesondere zwischen Metallbauteilen und Faserverbundbauteilen, ist nach wie vor problematisch.

Faserverbundbauteile können üblicherweise mit metallischen Werkstoffen nicht thermisch verbunden werden und hochautomatisierte, mechanische Fügetechniken wie Halbhohlstanznieten führen zu Schädigungen der Bauteile, deren Einfluss auf die Langzeiteigenschaften schwierig abzuschätzen ist.

Kohlenstofffaserverstärkte Kunststoffe führen in Verbindung mit metallischen Werkstoffen durch ihr hohes elektrochemisches Potential zu Herausforderungen hinsichtlich Korrosionsschutz.

Faserverbundbauteile werden üblicherweise mit den metallischen Bauteilen der restlichen Karosserie mit Hilfe von Klebstoff - teilweise in Kombination mit mechanischen Fügeelementen - verbunden. Die Verbindung zwischen Faserverbund- und Metallbauteil wird dabei entweder im Vorfeld im Zuge eines "Subassemblies", direkt in der Rohbau-Linie oder nach der Lackierung in der Montage hergestellt. Alle bekannten Füge-Prozesse zeigen Vor- und Nachteile hinsichtlich Eigenschaften, technischem Risiko und Kosten.

Neben unterschiedlichen Strukturklebstoffen finden aktuell Schrauben, Blindnieten, Fließlochschrauben und vereinzelt Halbhohlstanznieten als mechanische Fügeelemente für die Verbindung von Faserverbund- zu Metallbauteilen Einsatz.

Die DE 10 2014 019 024 A1 offenbart ein Hybrid-Halbzeug, insbesondere für eine Karosseriestruktur eines Kraftfahrzeugs, mit wenigstens einem ersten Bauteil aus einem Metall, welche zum Fügen an eine faserverstärkte Struktur ausgebildet ist, mit einem zweiten Bauteil aus einem thermoplastischen oder duroplastischen faserverstärkten Kunststoff, das mittels einer stoffschlüssigen oder formschlüssigen oder kraftschlüssigen Verbindung mit dem ersten Bauteil verbunden ist, wobei das wenigstens eine erste Bauteil ein Blechformteil ist, welches wenigstens teilweise in einem jeweiligen, im zweiten Bauteil vorgesehenen Durchbruch aufgenommen ist.

Aus der DE 10 2006 007 253 A1 ist ein Kraftfahrzeug-Hybridbauteil, insbesondere Struktur- oder Fahrwerkbauteil, bekannt, umfassend ein Metallbauteil und ein damit verbundenes Kunststoffbauteil, wobei das Metallbauteil und das Kunststoffbauteil unter Eingliederung einer metallischen Formschlusslage miteinander verbunden sind, wobei die Formschlusslage stoffschlüssig mit dem Metallbauteil gefügt ist und die Formschlusslage Ausnehmungen und Streben besitzt, die von dem Kunststoffbauteil umspritzt sind.

Die US 2017/327157 A1 offenbart ein Verfahren zur Herstellung eines Teils mit Hybridstruktur eines Kraftfahrzeugs, das die folgenden Schritte umfasst: (a) Formgebung eines Blechs aus metallischem Material, (b) Bereitstellung eines Bogens aus Verbundmaterial, der mindestens eine Schicht aus Fasern umfasst, die in eine Polymermatrix imprägniert oder eingebettet sind, wobei die Schicht aus Fasern aus einer Schicht aus unidirektionalen Fasern und einer Schicht aus gewebten Fasern ausgewählt wird, (c) Aufbringen einer Schicht aus Verbindungsmaterial auf eine Seite des Blechs aus metallischem Material vor oder nach der Formgebung oder auf eine Seite des Blechs aus Verbundmaterial vor oder nach der Formgebung, (d) Bildung eines Hybridelementes durch Formen des Verbundwerkstoffbleches in die Form des Bleches aus metallischem Material und Verbinden des Verbundwerkstoffbleches mit dem Blech aus metallischem Material mittels der Schicht aus Verbindungsmaterial, so dass das Blech aus Verbundwerkstoff eine Fläche des Bleches aus metallischem Material teilweise bedeckt, (e) Herstellung von Versteifungselementen durch Umspritzen mindestens eines Teils des geformten Hybridelements unter Verwendung eines Polymermaterials, um ein Teil mit Hybridstruktur zu bilden, so dass das Polymermaterial mindestens teilweise die Teile der Oberfläche der Platte aus metallischem Material bedeckt, die nicht von der genannten Platte aus Verbundmaterial bedeckt sind.

### Zusammenfassung der Erfindung

Es ist eine Aufgabe der Erfindung, ein Hybridbauteil, insbesondere für eine Kraftfahrzeug-Karosserie, anzugeben, dass eine hohe Torsionssteifigkeit aufweist und dabei kostengünstig in großer Stückzahl gefertigt werden kann oder kostengünstig und im Zuge eines Fertigungsprozesses für hohe Stückzahlen in eine Kraftfahrzeug-Karosserie eingebracht werden kann.

Die Lösung der Aufgabe erfolgt durch ein Hybridbauteil, insbesondere für eine Kraftfahrzeug-Karosserie, umfassend ein erstes Metallbauteil, ein zweites Metallbauteil und ein zwischen erstem und zweitem Metallbauteil angeordnetes Faserverbundbauteil, wobei in einem Flanschbereich das Faserverbundbauteil mehrere voneinander beabstandete Zungen aufweist, sodass das Faserverbundbauteil abschnittsweise in den Flanschbereich des Hybridbauteils gelangt und auch den Flanschbereich verstärkt, wobei das erste Metallbauteil zu den Zungen korrespondierende, gegenüber dem zweiten Metallbauteil mehr beabstandete Taschen aufweist, wobei die Zungen jeweils in den Taschen aufgenommen sind, wobei in Zwischenbereichen, die zwischen den Taschen liegen und in welchen das erste Metallbauteil weniger beabstandet zum zweiten Metallbauteil liegt, das erste Metallbauteil und das zweite Metallbauteil aneinander befestigt sind.

Erfindungsgemäß wird ein Faserverbundbauteil zur Verstärkung zwischen zwei Metallbauteilen eingesetzt. In einem Verbindungsbereich, also Flanschbereich, der drei Materiallagen weist eines der Metallbauteile, das erste Metallbauteil, vom zweiten Metallbauteil mehr beabstandete Taschen auf, also Formen des ersten Metallbauteils oder am ersten Metallbauteil die eine Bewandung aufweisen, die vom zweiten Metallbauteil weiter entfernt liegt als eine Bewandung des ersten Metallbauteils in einem Zwischenbereich, zwischen den Taschen. Dadurch wird in den Taschen ein Hohlraum gebildet, so dass in den Hohlraum der Taschen Zungen, also Fortsätze, des Faserverbundbauteils aufgenommen werden können.

Das Faserverbundbauteil kann so abschnittsweise in den Flanschbereich des Hybridbauteils gelangen und auch den Flanschbereich verstärken. Verbindungstechniken wie Nieten, Schrauben und dergleichen können dennoch in diesem Flanschbereich eingesetzt werden, um die beiden Metallbauteile miteinander zu verbinden und zerstören dabei nicht das dazwischenliegende Faserverbundbauteil, da dieses lediglich in den benachbarten Taschen, in Form von Zungen, vorliegt, nicht jedoch in den für die Metall-Metall-Verbindung genutzten Zwischenbereichen.

Durch die Erfindung wird somit ermöglicht, das an dem Faserverbundteil anliegende, vorzugsweise mit diesem auch verklebte erste Metallbauteil ohne Durchdringung oder Schädigung des Faserverbundbauteils mit einem weiteren Metallbauteil, dem zweiten Metallbauteil, mechanisch oder thermisch zu verbinden. Die Verbindungsflansche bzw. Flanschbereiche sind dadurch besonders steif ausgeführt.

Erfindungsgemäße Ausbildungen der Flanschbereiche für die Verbindung von Faserverbund- zu Metallbauteilen können zu folgenden Vorteilen führen:
- Keine Schädigung von Faserverbundkomponenten durch mechanische Fügeelemente oder thermische Metall-Metall-Verbindung und damit verbundenes, reduziertes Risiko hinsichtlich Bauteilqualität,
- Reduktion des Korrosionspotentials durch Vermeidung des Kontaktes mit beispielsweise mechanischen Fügelementen,
- Keine Änderungen der an sich üblichen Fügetechniken an der Rohbaulinie notwendig,
- Keine Verwendung von mechanischen Fügetechniken mit nur geringem Automatisierungspotential, wie zum Beispiel Blindnieten, notwendig,
- Versteifung der Verbindungsflansche, also Flanschbereiche, und damit der Bauteilverbindung sowie dadurch bessere Eigenschaften der Konstruktion bei Verwendung in einer Gesamtkarosserie.

Durch den Einsatz eines erfindungsgemäßen Hybridbauteils können die Masse der Kraftfahrzeug-Karosserie reduziert und/oder die mechanischen Eigenschaften verbessert werden.

Das erste und zweite Metallbauteil und das Faserverbundbauteil sind bevorzugt flächige Bauteile, zumindest sind die Flanschbereiche flächig ausgebildet. Das erste und das zweite Metallbauteil können insbesondere Metallbleche sein.

Bevorzugt bilden die mehreren voneinander beabstandeten Zungen des Faserverbundbauteils zusammen eine zinnenartige Struktur.

Vorzugsweise sind die Taschen als Verformungen des ersten Metallbauteils, insbesondere als Sicken, ausgebildet. Die Wände des ersten Metallbauteils sind daher in den Verformungen bzw. Sicken, die die Taschen bilden, weiter vom zweiten Metallbauteil entfernt als in den Zwischenbereichen. Die Zungen des Faserverbundbauteils liegen in den Taschen, also in den Verformungen bzw. Sicken.

In einer anderen Ausführungsform sind die Zwischenbereiche als Verformungen des ersten Metallbauteils, insbesondere als Sicken, ausgebildet. Die Wände des ersten Metallbauteils sind daher in den Verformungen bzw. Sicken näher am zweiten Metallbauteil als in den Taschen. Die Zungen des Faserverbundbauteils liegen in den Taschen, also zwischen den Verformungen bzw. Sicken.

Vorzugsweise sind das erste Metallbauteil und das zweite Metallbauteil in den Zwischenbereichen mittels üblichen form- und/oder kraft- und/oder stoffschlüssigen Verbindungen aneinander befestigt, insbesondere mittels Nieten oder Schrauben oder durch Schweißen.

Bevorzugt ist zumindest im Flanschbereich das Faserverbundbauteil mit dem ersten Metallbauteil verklebt und/oder das Faserverbundbauteil mit dem zweiten Metallbauteil verklebt. Der Klebstoff kann in den Taschen und/oder in den Zwischenbereichen angeordnet sein. Besonders bevorzugt ist das Faserverbundbauteil sowohl mit dem ersten Metallbauteil als auch mit dem zweiten Metallbauteil in den Taschen und den Zwischenräumen verklebt.

Außerhalb des Flanschbereichs gehen bevorzugt die Taschen und Zwischenbereiche des ersten Metallbauteils in eine gemeinsame, im Wesentlichen ebene, Fläche über. Insbesondere enden daher Verformungen, die die Taschen oder Zwischenräume bilden, am Ende des Flanschbereichs.

Vorzugsweise ist das erste Metallbauteil zusammen mit dem Faserverbundbauteil einem ersten Karosseriemodul zugeordnet, bilden also zusammen - eventuell ergänzt durch weitere Bauteile - das erste Karosseriemodul. Das zweite Metallbauteil ist einem zweiten Karosseriemodul zugeordnet, bildet also - wiederum eventuell zusammen mit weiteren Bauteilen - das zweite Karosseriemodul. Die beiden Karosseriemodule können unabhängig voneinander hergestellt oder bearbeitet worden sein. Das erste Karosseriemodul und das zweite Karosseriemodul können erfindungsgemäß im beschriebenen Flanschbereich aneinander befestigt werden, so dass die Zungen des Faserverbundbauteils in den Taschen des ersten Metallbauteils liegen und nach dem Fügen zwischen den beiden Metallbauteilen angeordnet sind, die in den Zwischenbereichen mittels konventioneller Fügeelemente aneinander befestigt sind.

### Kurzbeschreibung der Zeichnungen

Die Erfindung wird im Folgenden beispielhaft unter Bezugnahme auf die Zeichnungen beschrieben.
- Fig. 1: ist eine schematische dreidimensionale Ansicht eines erfindungsgemäßen Hybridbauteils.
- Fig. 2: ist eine Schnittansicht im Flanschbereich eines erfindungsgemäßen Hybridbauteils in einer weiteren Ausführungsform.

### Detaillierte Beschreibung der Erfindung

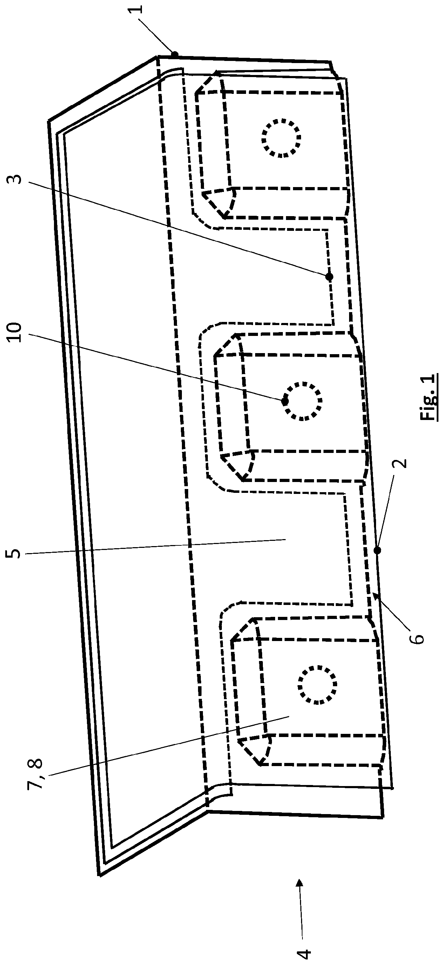

In Fig. 1 ist eine erfindungsgemäßes Hybridbauteil dargestellt, welches ein flaches erstes Metallbauteil 1, ein flaches zweites Metallbauteil 2 umfasst, sowie ein ebenfalls flaches, zwischen erstem und zweitem Metallbauteil 1, 2 angeordnetes Faserverbundbauteil 3. Die drei Bauteile weisen in einer Randzone eine Flanschbereich 4 zur gegenseitigen Verbindung auf. Der Flanschbereich 4 ist in dem dargestellten Beispiel abgewinkelt gegenüber dem restlichen Verlauf der jeweiligen flächigen Bauteile 1, 2, 3.

In dem Flanschbereich 4 weist das Faserverbundbauteil 3 mehrere voneinander beabstandete Zungen 5 auf, die zusammen eine zinnenartige Struktur bilden.

Das erste Metallbauteil 1 weist Sicken 8 auf, die Verformungen des ersten Metallbauteils 1 bilden, die in Zwischenbereichen 7 des ersten Metallbauteils 1 angeordnet sind, in welchen keine Zungen 5 des Faserverbundbauteils 3 liegen.

Die Zungen 5 des Faserverbundbauteils 3 liegen in Taschen 6, die durch eine Bewandung des ersten Metallbauteils 1 gebildet wird, die gegenüber dem zweiten Metallbauteil 2 mehr beabstandet ist, als der Abstand zwischen erstem Metallbauteil 1 und zweitem Metallbauteil 2 in den Zwischenbereichen 7, da die Bewandungen durch die Sickenbildung in den Zwischenbereichen 7 näher aneinander gerückt sind.

Die Taschen 6 korrespondieren zu den Zungen 5, da sie an den selben Positionen angeordnet sind und groß genug ausgebildet sind, um die Zungen 5 jeweils in die Taschen 6 aufzunehmen.

In den Zwischenbereichen 7, die zwischen den Taschen 6 liegen und in welchen das erste Metallbauteil 1 weniger beabstandet zum zweiten Metallbauteil 2 liegt, sind das erste Metallbauteil 1 und das zweite Metallbauteil 2 mittels jeweils zumindest eines Fügeelements 10 aneinander befestigt, insbesondere durch eine Stanzniet oder durch einen Schweißpunkt.

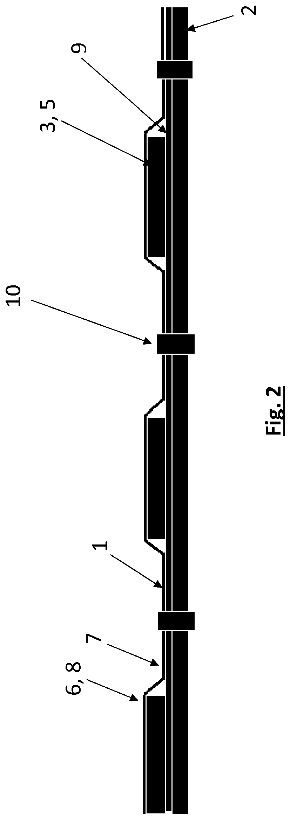

Zusätzlich zur Verbindung der Metallbauteile 1, 2 aneinander, sind im Flanschbereich 4 das Faserverbundbauteil 3 einerseits und das erste Metallbauteil 1, sowie an der gegenüberliegenden Seite das zweiten Metallbauteil 2, andererseits mittels Klebstoff 9 verklebt (in Fig. 2 nur zwischen Faserverbundbauteil 3 und zweitem Metallbauteil 2 dargestellt). Der Klebstoff 9 ist in den Taschen 6 und in den Zwischenbereichen 7 angeordnet.

Wie in Fig. 1 dargestellt, verläuft das erste Metallbauteil 1 außerhalb des Flanschbereichs 4 eben, so dass die Taschen 6 und Zwischenbereiche 7 des ersten Metallbauteils 1 außerhalb des Flanschbereichs 4 in eine gemeinsame ebene Fläche übergehen, da die Sicken 8 nur im Flanschbereich 4 ausgebildet sind.

Fig. 2 könnte eine Schnittansicht zeigen, die im Wesentlichen - bis auf eine seitliche Verschiebung - der Ausführungsform der Fig. 1 entsprechend könnte. Eine andere Sichtweise der Fig. 2 ist aber, dass hierin eine andere Ausführungsform der Erfindung dargestellt ist, in welcher die Taschen 6 selbst als Verformungen des ersten Metallbauteils 1, insbesondere als Sicken 8, ausgebildet sind. Die Zungen 5 des Faserverbundbauteils 3 liegen daher in den Taschen 6 und somit in den Sicken 8. In den Zwischenbereichen 7 liegen die Bewandungen des ersten Metallbauteils 1 und des zweiten Metallbauteils 2 näher aneinander und sind die beiden Metallbauteile 1, 2 mittels eines Fügelements 10 miteinander gefügt.

Insgesamt werden daher bevorzugt für die Verbindung eines Faserverbundbauteils 3 zu einem Metallbauteil 1 (Metallblech) über eine Klebeverbindung die Flansche derart ausgeführt, dass das Faserverbundteil 3 in den Bereichen, wo das Metallbauteil 1 mit einem weiteren Metallbauteil 2 (ebenfalls Metallblech) verbunden werden soll, beispielsweise um das Faserverbundbauteil 3 und das Metallbauteil 1 in eine Fahrzeugkarosserie einzubringen, ausgenommen ist und somit im Flanschbereich 4 über Zungen 5 verfügt.

Das Metallbauteil 1 verfügt wiederum über Taschen 6 im Flanschbereich 4 um die Zungen 5 des Faserverbundbauteils 3 aufzunehmen und einen direkten Kontakt der Metallbauteile 1 und 2 (Metallblech 1 und 2) in den Bereichen der Metall-Metall-Verbindung sicherzustellen.

Für eine Versteifung der Verbindung ist der gesamte Flanschbereich 4 außerdem mit Klebstoff 9 gefügt, wobei das Faserverbundbauteil 3 hierbei beidseitig über Klebeverbindungen mit den Metallbauteilen 1, 2 verbunden ist. Der Klebstoff 9 kann außerdem dazu dienen das Korrosionsrisiko im Verbindungsbereich zu senken.

### Bezugszeichenliste

- 1: erstes Metallbauteil
- 2: zweites Metallbauteil
- 3: Faserverbundbauteil
- 4: Flanschbereich
- 5: Zunge
- 6: Tasche
- 7: Zwischenbereich
- 8: Sicke
- 9: Klebstoff
- 10: Fügeelement

## Patentansprüche

1. Hybridbauteil, insbesondere für eine Kraftfahrzeug-Karosserie, umfassend ein erstes Metallbauteil (1), ein zweites Metallbauteil (2) und ein zwischen erstem und zweitem Metallbauteil (1, 2) angeordnetes Faserverbundbauteil (3),
**dadurch gekennzeichnet, dass** in einem Flanschbereich (4) das Faserverbundbauteil (3) mehrere voneinander beabstandete Zungen (5) aufweist, sodass das Faserverbundbauteil (3) abschnittsweise in den Flanschbereich (4) des Hybridbauteils gelangt und auch den Flanschbereich (4) verstärkt, wobei das erste Metallbauteil (1) zu den Zungen (5) korrespondierende, gegenüber dem zweiten Metallbauteil (2) mehr beabstandete Taschen (6) aufweist, wobei die Zungen (5) jeweils in den Taschen (6) aufgenommen sind, wobei in Zwischenbereichen (7), die zwischen den Taschen (6) liegen und in welchen das erste Metallbauteil (1) weniger beabstandet zum zweiten Metallbauteil (2) liegt, das erste Metallbauteil (1) und das zweite Metallbauteil (2) aneinander befestigt sind.

2. Hybridbauteil nach Anspruch 1,
**dadurch gekennzeichnet, dass** die mehreren voneinander beabstandeten Zungen (5) des Faserverbundbauteils (3) zusammen eine zinnenartige Struktur bilden.

3. Hybridbauteil nach zumindest einem der vorhergehenden Ansprüche,
**dadurch gekennzeichnet, dass** die Taschen (6) als Verformungen des ersten Metallbauteils (1), insbesondere als Sicken (8), ausgebildet sind oder dass die Zwischenbereiche (7) als Verformungen des ersten Metallbauteils, insbesondere als Sicken (8), ausgebildet sind.

4. Hybridbauteil nach zumindest einem der vorhergehenden Ansprüche,
**dadurch gekennzeichnet, dass** das erste Metallbauteil (1) und das zweite Metallbauteil (2) in den Zwischenbereichen (7) mittels üblichen form- und/oder kraft- und/oder stoffschlüssigen Verbindungen aneinander befestigt sind, insbesondere mittels Nieten oder Schrauben oder durch Schweißen.

5. Hybridbauteil nach zumindest einem der vorhergehenden Ansprüche,
**dadurch gekennzeichnet, dass** im Flanschbereich (4) das Faserverbundbauteil (3) mit dem ersten Metallbauteil (1) verklebt ist und/oder das Faserverbundbauteil (3) mit dem zweiten Metallbauteil (2) verklebt ist, wobei der Klebstoff (9) in den Taschen (6) und/oder in den Zwischenbereichen (7) angeordnet ist.

6. Hybridbauteil nach zumindest einem der vorhergehenden Ansprüche,
**dadurch gekennzeichnet, dass** die Taschen (6) und Zwischenbereiche (7) des ersten Metallbauteils (1) außerhalb des Flanschbereichs (4) in eine gemeinsame ebene Fläche übergehen.

7. Hybridbauteil nach zumindest einem der vorhergehenden Ansprüche,
**dadurch gekennzeichnet , dass** das erste Metallbauteil (1) zusammen mit dem Faserverbundbauteil (3) einem ersten Karosseriemodul zugeordnet ist und das zweite Metallbauteil (2) einem zweiten Karosseriemodul zugeordnet ist, wobei das erste Karosseriemodul und das zweite Karosseriemodul im Flanschbereich (4) aneinander befestigt sind.

## Claims

1. Hybrid component, in particular for a motor vehicle body, comprising a first metal component (1), a second metal component (2) and a fibre composite component (3) which is arranged between the first and second metal components (1, 2),
**characterized in that**, in a flange region (4), the fibre composite component (3) has a plurality of tongues (5) which are spaced apart from one another, such that the fibre composite component (3) passes into certain portions of the flange region (4) of the hybrid component and also reinforces the flange region (4), wherein the first metal component (1) has pockets (6) which correspond to the tongues (5) and which are at a greater spacing from the second metal component (2), wherein the tongues (5) are received in each case in the pockets (6), wherein, in intermediate regions (7) which lie between the pockets (6) and in which the first metal component (1) lies at a smaller spacing from the second metal component (2), the first metal component (1) and the second metal component (2) are fastened to one another.

2. Hybrid component according to Claim 1,
**characterized in that** the plurality of tongues (5) of the fibre composite component (3) which are spaced apart from one another together form a crenellated structure.

3. Hybrid component according to at least one of the preceding claims,
**characterized in that** the pockets (6) are configured as deformed portions of the first metal component (1), in particular as beads (8), or **in that** the intermediate regions (7) are configured as deformed portions of the first metal component, in particular as beads (8).

4. Hybrid component according to at least one of the preceding claims,
**characterized in that** the first metal component (1) and the second metal component (2) are fastened to one another in the intermediate regions (7) by means of customary form-fitting and/or force-fitting and/or materially bonded connections, in particular by means of rivets or screws or by welding.

5. Hybrid component according to at least one of the preceding claims,
**characterized in that**, in the flange region (4), the fibre composite component (3) is adhesively bonded to the first metal component (1) and/or the fibre composite component (3) is adhesively bonded to the second metal component (2), wherein the adhesive (9) is arranged in the pockets (6) and/or in the intermediate regions (7).

6. Hybrid component according to at least one of the preceding claims,
**characterized in that**, outside of the flange region (4), the pockets (6) and intermediate regions (7) of the first metal component (1) merge into a common planar surface.

7. Hybrid component according to at least one of the preceding claims,
**characterized in that** the first metal component (1) together with the fibre composite component (3) is assigned to a first body module, and the second metal component (2) is assigned to a second body module, wherein the first body module and the second body module are fastened to one another in the flange region (4).

## Revendications

1. Composant hybride, destiné notamment à une carrosserie de véhicule automobile, ledit composant hybride comprenant un premier composant métallique (1), un deuxième composant métallique (2) et un composant composite fibreux (3) disposé entre le premier et le deuxième composant métallique (1, 2),
**caractérisé en ce que**, dans une zone formant bride (4), le composant composite fibreux (3) comporte une pluralité de languettes espacées (5) de sorte que le composant composite fibreux (3) parvient par portions jusque dans la zone formant bride (4) du composant hybride et renforce également la zone formant bride (4), le premier composant métallique (1) comportant des poches (6] qui correspondent aux languettes (5) et qui sont plus espacées par rapport au deuxième composant métallique (2), les languettes (5) étant chacune reçues dans les poches (6), le premier composant métallique (1) et le deuxième composant métallique (2) étant fixés l'un à l'autre dans les zones intermédiaires (7) qui sont situées entre les poches (6) et dans lesquelles le premier composant métallique (1) est moins espacé du deuxième composant métallique (2).

2. Composant hybride selon la revendication 1,
**caractérisé en ce que** la pluralité de languettes espacées (5) du composant composite fibreux (3) forment conjointement une structure crénelée.

3. Composant hybride selon l'une au moins des revendications précédentes, **caractérisé en ce que** les poches (6) sont réalisées sous forme de déformations du premier composant métallique (1), en particulier sous forme de collets (8), ou **en ce que** les zones intermédiaires (7) sont réalisées sous forme de déformations du premier composant métallique, en particulier sous forme de collets (8).

4. Composant hybride selon l'une au moins des revendications précédentes, **caractérisé en ce que** le premier composant métallique (1) et le deuxième composant métallique (2) sont fixés l'un à l'autre dans les zones intermédiaires (7) au moyen de liaisons par complémentarité de formes et/ou en force et/ou de matière, notamment au moyen de rivets ou de vis ou par soudage.

5. Composant hybride selon l'une au moins des revendications précédentes, **caractérisé en ce que**, dans la zone formant bride (4), le composant composite fibreux (3) est collé au premier composant métallique (1) et/ou le composant composite fibreux (3) est collé au deuxième composant métallique (2), l'adhésif (9) étant disposé dans les poches (6) et/ou dans les zones intermédiaires (7).

6. Composant hybride selon l'une au moins des revendications précédentes, **caractérisé en ce que** les poches (6) et les zones intermédiaires (7) du premier composant métallique (1) se transforment en une surface plane commune à l'extérieur de la zone formant bride (4).

7. Composant hybride selon l'une au moins des revendications précédentes, **caractérisé en ce que** le premier composant métallique (1) est associé, conjointement au composant composite fibreux (3), à un premier module de carrosserie et le deuxième composant métallique (2) est associé à un deuxième module de carrosserie, le premier module de carrosserie et le deuxième module de carrosserie étant fixés l'un à l'autre dans la zone formant bride (4).
